# EUROPEAN PATENT SPECIFICATION

(11) **EP 3 725 709 B1**
(45) Date of publication and mention of the grant of the patent: **05.01.2022**
(21) Application number: 20165696.4
(22) Date of filing: 25.03.2020
(51) Int. Cl.: B65G 43/02, F27B 9/40, B65G 13/00

(54) **APPARATUS FOR DETECTING AND SIGNALLING THE BREAKAGE OF ROLLERS IN A ROLLER CONVEYOR**
VORRICHTUNG ZUM ERFASSEN UND SIGNALISIEREN DES BRUCHS VON ROLLEN IN EINEM ROLLENFÖRDERER
APPAREIL DE DÉTECTION ET DE SIGNALISATION DE LA RUPTURE DE ROULEAUX DANS UN TRANSPORTEUR À ROULEAUX

(30) Priority: 17.04.2019 IT 201900005992
(43) Date of publication of application: 21.10.2020
(73) Proprietor: G.P. Service S.r.L., 41049 Sassuolo (MO) (IT)
(72) Inventor: PAULICELLI, Michele, 41049 SASSUOLO (MO) (IT); GOTTARDI, Mario, 42013 CASALGRANDE (RE) (IT)
(74) Representative: Corradini, Corrado

(56) References cited:
- WO-A1-2005/114081
- WO-A1-2010/142029
- WO-A1-2012/057680
- WO-A1-2016/019431
- WO-A2-2015/042661
- CN-A- 102 435 067
- CN-U- 205 138 188
- IT-A1- UB20 155 386
- JP-A- H0 989 461
- JP-A- H11 132 666
- JP-U- H0 542 995

## Description

### TECHNICAL FIELD

The present invention relates to an apparatus for detecting the breakage of rollers in a roller conveyor, in particular for detecting the breakage of rollers in a roller conveyor of a kiln for the firing of ceramic products.

### PRIOR ART

Apparatus are known for detecting the breakage of rollers in a roller conveyor, for example those used to convey products for firing into a kiln, which provide for a rope, which is equipped with an end connected to an electrical power device and is in tension above the ends of the rollers leaving the kiln, for the whole length of the conveyor.

These apparatus comprise a plurality of abutment elements distributed along the conveyor near the rope, which are electrically connected to only one end of the rope and to the electrical power supply device. When a roller breaks, its end lifts upwards and touches the rope, pushing it towards an abutment element near the broken roller, and in this way forms a closed circuit crossed by a current between the rope, the abutment element and an electrical power supply device. An electronic control unit of the apparatus is configured to send an alarm signal when it detects an electric current running in the portion of the circuit between one end of the rope and the abutment element.

A problem of this solution is that the rope must be as long as the kiln, therefore even 150 m, and must be considerably tensioned in order to remain parallel to a sliding plane of the conveyor for the whole length of the conveyor itself. This means that the roller maintenance and cleaning operations are slowed down by the fact of having to initially free the field of operation of the rope and then subsequently re-tension the rope. Furthermore even when maintenance is not required, it may be periodically necessary to re-tension the rope, which tends to lengthen and flex as time passes. The document JP H09 89461 A discloses an apparatus for detecting and signalling the breakage of a roller in a roller conveyor provided with a series of rollers arranged side by side along a feed direction, said apparatus being equipped with a monitoring unit configured to detect the breakage of a roller in a group of rollers of the series of rollers and comprising: a bar, adapted to be superimposed in plan on one end of the rollers of the group of rollers, the bar being provided with a first axial end and a second axial end opposite to the first axial end, wherein the monitoring unit comprises a sensor operatively connected to an electronic control unit of the apparatus and configured to detect contact between the bar and an axial end of a broken roller and generate an activation signal detectable by the electronic control unit when an axial end is in contact with the bar, and wherein the electronic control unit is configured to send an alarm signal to an interface device of the apparatus when it detects the activation signal generated by the sensor.

It is an object of the present invention to resolve said problems of the known technique within the scope of a simple, rational and affordable solution.

Such object is achieved by the features of the invention indicated in the independent claim. The dependent claims outline preferred and/or particularly advantageous embodiments of the invention.

### DISCLOSURE OF THE INVENTION

The invention makes available an apparatus for detecting and signalling the breakage of a roller in a roller conveyor provided with a series of rollers arranged side by side along a feed direction, said apparatus being equipped with a monitoring unit configured to detect the breakage of a roller in a group of rollers of the series of rollers and comprising:
- a bar, adapted to be superimposed in plan on one end of the rollers of the group of rollers, the bar of which is provided with a first axial end and a second axial end opposite to the first axial end and movable between a first position, in which the first axial end and the second axial end lie at least partially on respective reference planes, and a second position, in which at least one of either the first axial end or the second axial end is at a higher level than the corresponding reference plane due to the breakage of a roller,
- a rod provided with a portion adapted to be in contact with the bar,
- a connection element configured to maintain said portion of the rod in contact with the bar,
wherein the rod is at least partially movable together with the bar through the connection element between a first position which the rod occupies when the bar is in the first position, and a second position, which the rod occupies when the bar is in the second position, wherein the monitoring unit comprises a sensor operatively connected to an electronic control unit of the apparatus and configured to detect the passage of the rod between the first and the second position and generate an activation signal detectable by the electronic control unit when the rod is in the second position,
and wherein the electronic control unit is configured to send an alarm signal to an interface device of the apparatus when it detects the activation signal generated by the sensor. Thanks to such solution, the detection system is provided with a monitoring unit of particularly rational and equally effective architecture, without any drawbacks, as it allows the sensor to be driven remotely, distancing it from the hottest parts of the kiln which could reduce its useful life.

An embodiment of the invention envisages that the sensor may be a switch.

Thanks to such solution, a particularly sturdy sensor which assures rapid installation operations is made available.

Preferably, said switch is of the mechanical button or lever type, in order to make the architecture of the monitoring unit and the detection system as simple as possible to realise and as intuitive as possible to use.

Yet another embodiment of the invention envisages that the switch may be of the monostable type.

Thanks to such solution, when the bar has not moved, the switch remains autonomously in its stable position, and in particular in a position in which it does not consume energy, and is equipped with a return mechanism, for example a spring, in such a way that following the recovery of the roller, when it is no longer subject to the action of the rod, that is when the rod returns to the first position, it automatically returns to the stable position in which it does not send the activation signal.

Yet another embodiment of the invention envisages that the connection element may comprise an elastic element.

Thanks to such solution, a connection element of intuitive use is made available, which is particularly effective for maintaining the rod in contact with the bar.

According to another embodiment of the invention, the monitoring unit may be powered by a battery.

Thanks to such solution, the apparatus for detecting and signalling the breakage of rollers is even more versatile and quick to install, as the overall use of cables in the monitoring unit is further reduced, without having to unwind network connection cables along the whole length of the kiln to power the monitoring unit. In fact, the power battery may easily be positioned near the monitoring unit

Another embodiment of the invention envisages that the interface device may comprise at least one of either a display screen, a light emitter and a loudspeaker.

Thanks to such solution, the apparatus for detecting and signalling the breakage of rollers is equipped with an interface device of immediate and intuitive operation, and at the same time particularly effective in signalling the breakage of rollers.

A further embodiment of the invention provides that the electronic control unit may be connected to the interface device by means of a remote and wireless communication systems equipped with a transmitter device operatively connected to the electronic control unit and a receiver device operatively connected to the electronic interface device.

Thanks to such solution, the invention makes available an apparatus for detecting and signalling the breakage of a roller that is cheaper, more versatile and quicker to install than devices of the prior art, as it is equipped with a remote and wireless communication system that minimises the use of wiring.

Furthermore the use of a remote and wireless communication system enables the arrangement of the electronic control unit and the interface device in any mutual position along the extension of the kiln, which as said may exceed even one hundred metres, thus making available a particularly versatile communication system.

Another embodiment of the invention provides that the rod may be slidably inserted inside a guide tube.

Thanks to such solution, the movement of the rod between the first position and the second position is a guided movement, guaranteeing the repeatability of the movement of the rod and therefore a stronger system for the detection of said movement.

### BRIEF DESCRIPTION OF THE DRAWINGS

Further features and advantages of the invention will be more apparent after reading the following description provided by way of non-limiting example, with the aid of the accompanying drawings.

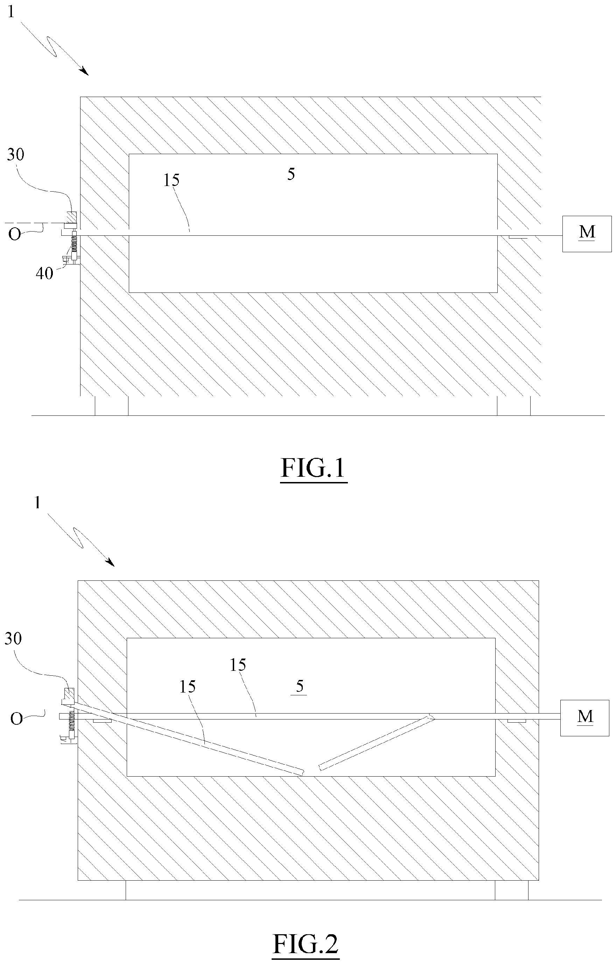

Figure 1 is a schematic view of a kiln equipped with an apparatus for detecting and signalling the breakage of rollers equipped with a monitoring unit comprising a bar, wherein the rollers are intact and the bar is found in a first position.
Figure 2 is a schematic view of the kiln in figure 1, wherein a roller is broken and the bar is in a second position.
Figure 3 is a schematic side view of a portion of the kiln wherein there is the apparatus for detecting and signalling the breakage of rollers.

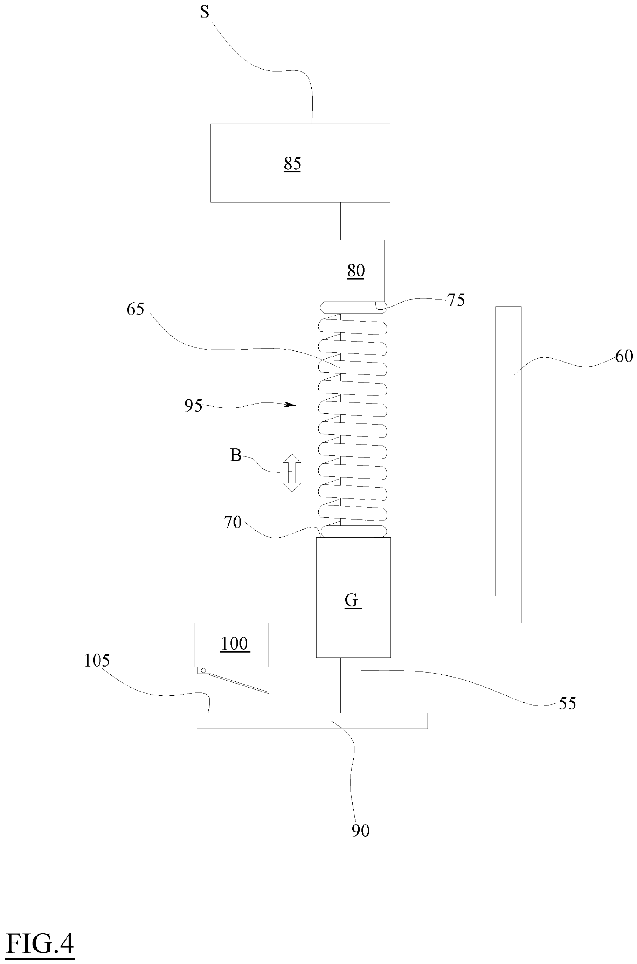

Figure 4 is a front view of a rod, a sensor, a support and a connection body of a monitoring unit of the apparatus.

### BEST MODE OF THE INVENTION

With particular reference to these figures, 1 indicates overall a kiln, for example for the firing of ceramic products.

The kiln 1 comprises a firing chamber 5, for example shaped as a tunnel that longitudinally crosses the kiln, and a roller conveyor which provides a mobile supporting surface along a feed direction A for the products to be fired when crossing the cooking chamber 5.

The roller conveyor comprises a base frame and a series of rollers 15, for example homologous to each other, side by side along the feed direction A and rotatably associated to the base frame in relation to a substantially horizontal pivot axis.

In particular, the rollers 15 have parallel pivot axes, lying on the same plane and transverse, for example, perpendicular, to the feed direction A.

For example the rollers 15 of the series of rollers are side by side and not in contact, so that between two consecutive rollers 15 there is an interspace 20, which, for example, is smaller in size than an external diameter of the roller 15.

Each roller 15 is substantially shaped as a cylindrical body, for example, axially hollow, that is each roller 15 is cylindrical in shape and has an axial cavity that crosses it from one axial end to an opposite axial end.

Each roller 15 of the series of rollers is equipped with a first axial end and a second axial end, wherein the first axial end protrudes externally to the cooking chamber 5 through a corresponding opening in the side wall of the kiln 1. There is a single opening, for example of a circular shape, for each roller 15.

The second end is associated to a motor unit M adapted to set the roller 15 in rotation with respect to its pivot axis.

The kiln 1 comprises an apparatus 10 for detecting and signalling the breakage of a roller 15 of said rollers 15, which is configured to detect and signal the breakage of a roller 15 of the series of rollers.

The apparatus 10 comprises firstly a detection system configured to detect the breakage of a roller 15 of the series of rollers 15.

For this purpose the detection system comprises a monitoring unit 25 configured to detect the breakage of a roller 15 in a group of rollers of the series of rollers.

It is specified that the number of rollers 15 of a group of rollers is less than the number of rollers 15 of the series of rollers.

That is, the total number of rollers 15 of the series of rollers is equal to the sum of the number of rollers 15 of at least two groups of rollers, and moreover the groups of rollers may comprise an equal or different number of rollers 15.

The monitoring unit 25 comprises a rigid or semi-rigid bar 30, provided with a first axial end B1 and a second axial end B2.

The bar 30 is positioned so as to be superimposed in plan on one axial end of each roller 15 of the group of rollers, for example on the first axial end of each roller 15 of the group of rollers 15 protruding externally from the cooking chamber 5 of the kiln 1.

The bar 30 is mobile between a first position, wherein the first axial end B1 and the second axial end B2, lie at least partially on respective reference planes O, and a second position, wherein at least one of the first axial end B1 and the second axial end B2 are at a greater height in respect of the corresponding reference plane O due to the breakage of a roller 15.

For example, the bar 30 in the first position is arranged with the longitudinal axis parallel to the feed direction A and lying on a plane parallel to the lying plane of the products on the roller conveyor. Furthermore, the first axial end B1 and the second axial end B2 lie at least on respective reference planes O that are mutually co-planar and for example substantially horizontal.

Preferably, there is a single reference plane O, horizontal and arranged at a greater height than the rollers.

In the event of the breakage of one of the rollers 15 of the group of rollers beneath the bar 30, said broken roller 15 hits the bar 30, thus exerting a lifting action thereon, and thus the bar 30 moves to the second position.

The monitoring unit 25 then comprises a rigid rod 55, that is not torsionally or flexurally deformable under the usual workloads for which it is envisaged, for example metallic.

In the embodiment shown, the monitoring unit 25 comprises a pair of rods 55 configured to support a respective bar 30 from below.

The rods 55 of the pair of rods 55 are arranged at a set distance along the feed direction A in such a way as that between them there is a group of rollers, and each rod 55 has a contact portion adapted to be in contact with the bar 30 and to support it.

In detail, each rod 55 is adapted to be in contact with and support the bar 30 from below at an axial end B1 ,B2 of the bar.

Furthermore, each rod is at least partially housed in the interspace between two adjacent rollers of the group of rollers.

Furthermore, in the embodiment shown, each rod 55 is adapted to be associated to the roller conveyor 15, for example slidably along a direction B parallel to the longitudinal axis of the rod 55, preferably vertical, to the conveyor frame.

In the embodiment shown, the monitoring unit 25 comprises a rigid support 60 for each rod 55, by means of which the respective rod 55 is associated, for example slidably, to the base frame of the roller conveyor 15.

In detail, the rigid support 60 is substantially L shaped, that is it comprises a first stretch adapted to be rigidly and removably fixed, for example bolted, to the roller conveyor 15, that is to a frame of the roller conveyor, and a second stretch substantially squared to the first, and the rod 55 is associated to said second stretch.

In particular, each rod 55 is movably associated in translation to said second stretch of the rigid support 60 along the direction B.

For this purpose, the rigid support 60 has a guide tube G which defines a through cavity with a central axis parallel to said direction B, in which the rod 55 is slidably inserted. The guide tube G is fixed rigidly, for example welded, to said second stretch of the rigid support 60.

In the embodiment shown, the rod 55 is therefore inside the guide tube G, preferably arranged with its own longitudinal axis substantially vertical so that the direction B is vertical.

Each rod 55 thus has a first longitudinal axial end, in use above, and an opposite longitudinal axial end, in use below.

In particular, each rod 55 is provided with at least a portion adapted to be in contact with the bar 30, for example at the said first axial end of the bar.

In the embodiment shown, each rod 55 has at its first longitudinal axial end a first plate 85 squared with the rod 55 and fixed rigidly, for example welded, to it.

It is not excluded that the first plate 85 may be made in a unitary body with the rod 55, that is that the first plate 85 and the rod 55 may be made from a single body, that is they may be made from a single material machining process.

In practice said plate defines a substantially L shaped structure with the rod 55.

Said first plate 85 has two larger surfaces and two smaller surfaces, and is preferably arranged so that its larger surfaces are arranged on respective planes parallel to the longitudinal axis of the rod 55.

Said first plate 85 has an upper surface S, for example substantially horizontal, which is adapted to be in contact with the bar 30 and support it below. In practice the bar 30 rests on the respective upper surfaces S of a corresponding pair of rods 55.

Furthermore, each rod 55 may have a second plate 90, at its second longitudinal axial end, arranged substantially squared to the rod 55 and fixed rigidly, for example welded, to it.

It is not excluded that the second plate 90 may be made in a unitary body with the rod 55, that is that the second plate 90 and the rod 55 may be made from a unitary body, that is they may be made from a single material machining process.

In practice the second plate 90 defines a substantially L shaped structure with the rod 55. Said second plate 90 has two larger surfaces and two smaller surfaces, and is preferably arranged so that its larger surfaces are arranged on respective planes orthogonal to the longitudinal axis of the rod 55.

It is not excluded that the second plate 90 may be made in a unitary body with the rod 55, that is that the second plate 90 and the rod 55 may be made from a unitary body, that is they may be made from a single material machining process.

In practice the second plate 90 defines a substantially L shaped structure with the rod 55. Said second plate 90 has two larger surfaces and two smaller surfaces, and is preferably arranged so that its larger surfaces are arranged on respective planes orthogonal to the longitudinal axis of the rod 55.

Each rod 55 is at least partially movable with the bar 30, by means of a respective connection element.

The connection element 95 is configured to maintain said portion of the rod 55 in contact with the bar 30, in such a way as that at the same time and after the movement of the bar 30 from the first position to the second position the connection element enables the movement of the rod 55 from a first position to a second position.

Preferably said connection element 95 comprises an elastic element, for example a spring 65.

In the embodiment shown, said connection element 95, comprises said spring 65 which is interposed between a first abutment surface 70 made in the rigid support 60 and a second abutment surface 75 made in the rod 55.

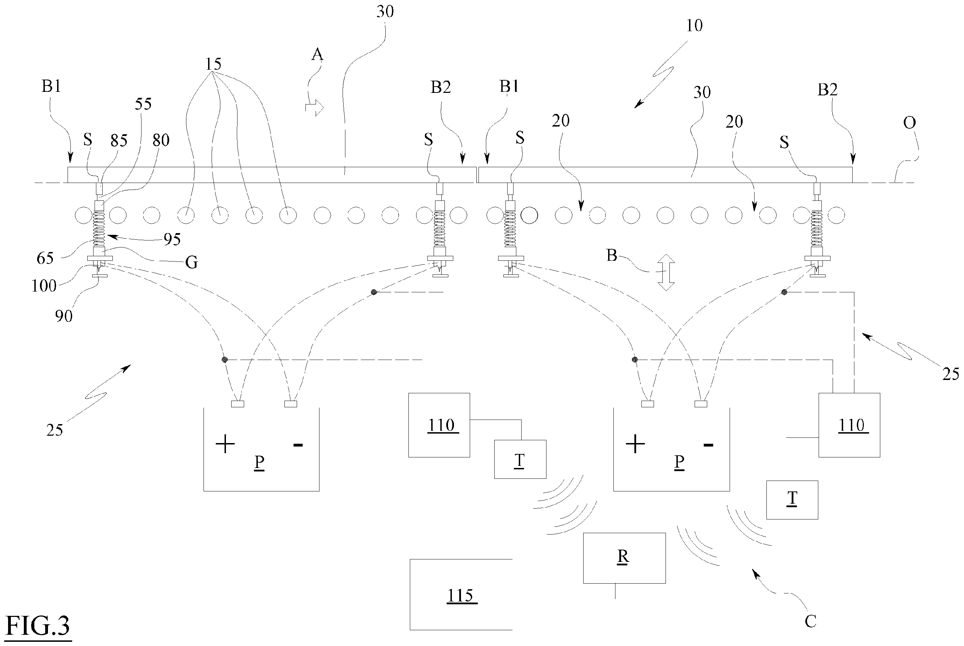

In particular, as shown in figure 3, said spring 65 is coaxially inserted on the rod 55 and is provided with an end resting on said first abutment surface 70 of the rigid support 60, for example at the guide tube G, and a second end placed in direct contact with said second abutment surface 75 of the rod 55.

For example, in the embodiment shown, the rod 55 has an external thread and is provided with an abutment body 80 provided with a corresponding internal thread by which it is fixed to the rod 55, for example at its first axial end (in use above).

Said abutment body 80 is provided with a surface, in use below, which makes available said second abutment surface 75 of the rod 55 for the connection element 95.

The connection element 95, that is the spring 65, in this embodiment is thus interposed between the rod 55 and the rigid support 60 in such a way as to push said portion of the rod 55 in contact with the bar 30, for example also to prevent the axial extraction of the rod 55 from the guide tube G.

However, it is not excluded that in alternative embodiments the connection element 95 may be configured differently from what shown in the present embodiment, for example the connection element 95 could be defined by the force of gravity, or could be a hinge which connects the bar to the rod, or said connection element 95 could also be defined by welding between the rod 55 and the bar 30, provided said connection element 95 is adapted to fulfil the function of maintaining said portion of the rod 55 in contact with the bar 30.

Each rod 55 is mobile, by means of the connection element 95, between said first position which it occupies when the bar 30 is in the first position, and said second position which it occupies when the bar 30 is in the second position.

In detail in the first position the said portion of contact with the bar 30, for example said surface S of the first plate 85, lies on at least one of the reference planes O of the axial ends B1,B2 of the bar 30 (in the example both being coplanar reference planes), and a second position in which said portion of the rod 55 is at a distance from (for example at a greater height than) said at least one reference plane O of the axial ends B1,B2 of the bar 30.

In particular, the reference plane O is defined by the height of the surface S, for example a height from a ground on which the roller conveyor rests, when the bar 30 rests on the respective pair of rods 55 pressing the respective springs 65 of the corresponding connection elements.

The rod 55 is initially associated to the roller conveyor 15 arranged in its second position, and is raised from the frame through the interspace 20 between two consecutive rollers 15 in such a way that the portion of contact is placed at a greater height than the height at which at least one reference plane O of an axial end of the bar 30 lies (in the example, both reference planes O).

In this second position the connection element 95, that is the spring 65, is in an undisturbed connection, that is it is not subjected to external forces (compression) by other bodies.

When the bar 30 is placed in the first position it rests on said portion of the rod 55, pushing on it and thus making the rod 55 slide axially inside the guide tube G along said direction B following the elastic deformation (compression) of the connection element 95 and the rods 55 of the pair of rods 55 move to the respective first position, consequently the bar 30 moves to the respective first position.

When, following the breakage of a roller 15, at least one of the axial ends B1 ,B2 of the bar 30 lifts from its respective reference plane O, that is in relation at least to one of the contact portions of the rods 55 when the rods 55 are in the first position, and therefore the bar 30 moves to the respective second position, the rod 55 on which said axial end B1,B2 was resting, which was raised by the lifting action generated by the broken roller 15, under the thrust action of the connection element 95 which elastically returns to its condition undisturbed, moves to the respective second position.

The monitoring unit 25 also comprises a sensor 100 configured to detect the movement of the rod 55 between the first position and the second position. In particular the monitoring unit 25 comprises a pair of sensors 100, each configured to detect the movement of a respective rod 55 between the first position and the second position.

In this way the detection apparatus detects the movement of the bar 30 from the first position to the second position.

Each sensor 100 may be a proximity sensor, a magnetic sensor, a laser sensor or any other sensor in any case adapted to the purpose of detecting the movement of the rod 55.

Each sensor 100 is also configured to generate an activation signal when the rod 55 detects that the rod is in the second position.

In the embodiment shown, each sensor 100 is configured as a switch, for example of the mechanical button or lever type.

Said switch is operable between an open state and a closed state, for example acting on said lever or button.

Preferably, the switch is part of an electric circuit comprising a power supply battery P and is configured in such a way that when the switch is in the open state, the electric circuit is open and when it is in the closed state, the electric circuit is closed.

In the embodiment shown, wherein each sensor comprises the switch, the activation signal is represented by the passage of current through the respective electric circuit.

Alternatively, if the sensor 100 is a proximity sensor or a magnetic sensor or a laser sensor or other, said activation signal may be configured as the variation above a reference threshold and/or the interruption of the signal generated by said sensors when the movement of the rod 55 from the first position to the second position is detected.

The switch may be a monostable switch, that is of the type which remains autonomously in one of the two said states, for example the open state, and moves to the other state, that is the closed state, only when the lever or button is operated.

Furthermore, said monostable switch is provided with a return mechanism, for example a spring, which when said operation of the lever or button stops, it returns automatically to its stable position, that is it automatically returns to the open state.

Each rod 55 is therefore provided with an abutment portion 105 configured to be detected by the respective sensor 100.

For example each rod 55 is provided with an abutment portion 105 adapted to be in contact with said lever or button of the switch to move it from the open state to the closed state when the rod moves from the first position to the second position.

In particular, said abutment portion 105 is made available by said second plate 90 positioned at the second axial end of the rod 55.

In the embodiment shown, the switch is fixed to the frame, and positions so that when the respective rod 55 is in the second position said abutment portion 105, that is said second plate 90, pushes, and for example holds down, said lever or button on the switch moving it from the open state to the closed state and keeping it in the closed state, for as long as the rod 55 remains in the second position.

In particular, each sensor 100, that is each switch, may be fixed to the rigid support 60 of the respective rod so that the lever (or button) faces the second end of the rod 55 and in particular faces said abutment portion 105 made available by the second plate 90. Preferably each monitoring unit 25 comprises two rods 55 shaped as described above and associated to the conveyor as described above, each mobile between said first position and said second position as a result of the movement of the bar 30 between the first position and the second position.

The monitoring unit 25 thus comprises two sensors each adapted to detect the movement of the respective rod 55 between the first position and the second position, and configured to generate said activation signal when the respective rod 55 is in the second position. In particular, each sensor 100, and therefore the respective rod 55, is arranged at an end roller 15 of the rollers 15 of the group of rollers.

In this way, the monitoring unit 25 is configured to detect the breakage of each roller 15 of the group of rollers 15, whether this is an initial or intermediate or final roller 15 of the group of rollers 15 along the feed direction A.

The detection system comprises a plurality of monitoring units 25, each arranged as described above and operating as described above.

In particular, the detection system comprises as many monitoring units 25 as there are groups of rollers of the series of rollers, each adapted to detect the breakage of a roller 15 of a respective group of rollers.

Each monitoring unit 25, that is each sensor 100, may be powered by a single respective battery P.

The apparatus 10 then comprises an electronic control unit 110 operatively connected to the detection system.

Preferably, the apparatus 10 comprises a plurality of electronic control units 110 each operatively connected to a respective monitoring unit 25 of the detection system. The apparatus may comprise an electronic control unit for each sensor of each monitoring unit 25.

Said electronic control unit 110 is preferably powered by a battery P.

For example, the electronic control unit 110 and the detection system may be powered by the same battery P.

More specifically, each electronic control unit 110 and the respective monitoring unit 25, that is the respective sensor 100, may be powered by the same battery P.

Each electronic control unit 110 is configured to detect said activation signal generated by the sensor 100 of the monitoring unit 25, that is by at least one of the sensors 100 of a monitoring unit of the plurality of monitoring units, following the breakage of a roller 15. For example, each electronic control unit 110 is configured to detect the passage of current inside the circuit defined by the switch and the battery P, when the switch is in the closed state after the movement of the rod 55 to its second position.

Each electronic control unit 110 is also configured to send an alarm signal when it detects said activation signal.

In particular, said alarm signal is configured to indicate the respective group of rollers 15 of the broken roller 15.

That is, the alarm signal is configured to provide information on the breakage of a roller 15 and the information relating to the group of rollers 15 of the series of rollers to which said broken roller 15 belongs.

In particular, the apparatus 10 comprises a remote and wireless communication system C equipped with a transmitter device T operatively connected to the electronic control unit 110 and a receiver device R operatively connected to an electronic interface device 115. In this case the electronic control unit is configured to send the alarm signal to the interface device 115 via the communication system C and the interface device is configured to emit a signal understandable to a user and corresponding to the alarm signal, that is indicating the breakage of a roller, for example also of a specific group of rollers of the series of rollers.

Preferably, the interface device 115 comprises at least one of a display screen, a light emitter, a pager, an alarm clock and a loudspeaker.

For example the interface device 115 may comprise more than one light emitter, each associated to a respective group of rollers 15.

The communication system may also comprise several receiver devices R each connected to a respective electronic interface device 115.

In an embodiment, the electronic control unit 110 may be configured so that, having detected the activation signal of the sensor 100 of the detection systems interface, it can send said activation signal to the interface device 115 via the communication system C, that is it can switch of the light emitter associated to the group of rollers 15 to which the broken roller 15 belongs.

More specifically, each electronic control unit 110 may be operatively connected to a respective light emitter of the interface device 115 to switch on said light emitter when a roller 15 breaks in the group of rollers 15 to which it is associated.

Alternatively or additionally, if the interface device 115 comprises a loudspeaker, the electronic control unit 110 is operatively connected to the loudspeaker in such a way as to send said alarm signal, that is in such a way as to enable the loudspeaker to emit a sound, and in particular a different sound for each group of rollers 15.

For example said sound may comprise the vocal emission of a code, wherein said code corresponds to an identification code of the group of rollers 15 wherein the breakage of a roller 15 occurred.

Again, alternatively or additionally, the interface device 115 may comprise a display screen. This display screen may be configured to show an identification code of a group of the plurality of groups of rollers wherein the breakage of a roller occurred. Alternatively or additionally, it is possible to provide that said interface device 115 may be any portable electronic device, for example a portable computer, a tablet or a smartphone provided to an operator appointed to control the apparatus 10.

As said above, the electronic control unit 110, that is each electronic control unit 110, is operatively connected to the interface device 115 by means of wireless technology. The communication system C may comprise a Bluetooth communication system and/or a radio communication system and/or a Wi-Fi communication system and/or an LTE communication system and/or any other wireless communication system.

In an embodiment not shown, the communication system may comprise signal repeaters interposed between the electronic control unit 110 and the interface device 115, configured to capture the alarm signal sent from the electronic control unit 110 through said transmitter and to transmit the alarm signal to the interface device 115 by means of the receiver operatively connected to it.

This guarantees a greater coverage of the remote and wireless communication system.

In practice, the materials used, as well as the contingent shapes and sizes, can be whatever according to the requirements without for this reason departing from the scope of protection of the following claims.

## Claims

1. An apparatus (10) for detecting and signalling the breakage of a roller (15) in a roller conveyor provided with a series of rollers arranged side by side along a feed direction (A), said apparatus (10) being equipped with a monitoring unit (25) configured to detect the breakage of a roller (15) in a group of rollers of the series of rollers and comprising:
- a bar (30), adapted to be superimposed in plan on one end of the rollers (15) of the group of rollers, the bar of which is provided with a first axial end (B1) and a second axial end (B2) opposite to the first axial end (B1) and movable between a first position, in which the first axial end (B1) and the second axial end (B2) lie at least partially on respective reference planes (O), and a second position, in which at least one of either the first axial end (B1) or the second axial end (B2) is at a higher level than the corresponding reference plane (O) due to the breakage of a roller (15),
- a rod (55) provided with a portion (S) adapted to be in contact with the bar (30)
- a connection element (95) configured to maintain said portion (S) of the rod (55) in contact with the bar (30),
wherein the rod (55) is at least partially movable together with the bar (30) through the connection element (95) between a first position which the rod (55) occupies when the bar (30) is in the first position, and a second position, which the rod (55) occupies when the bar (30) is in the second position,
wherein the monitoring unit (25) comprises a sensor (100) operatively connected to an electronic control unit (110) of the apparatus (10) and configured to detect the passage of the rod (55) between the first and the second position and generate an activation signal detectable by the electronic control unit (110) when the rod (55) is in the second position,
and wherein the electronic control unit (110) is configured to send an alarm signal to an interface device (115) of the apparatus (10) when it detects the activation signal generated by the sensor (100).

2. Apparatus (10) according to claim 1, wherein the sensor (100) is a switch.

3. Apparatus (10) according to claim 2, wherein the switch is of the monostable type.

4. Apparatus (10) according to claim 1, wherein the connection element comprises an elastic element (65).

5. Apparatus (10) according to claim 1, wherein the monitoring unit is powered by a battery (P).

6. Apparatus (10) according to claim 1, wherein the interface device (115) comprises at least one of a display screen, a light emitter, and a loudspeaker.

7. Apparatus (10) according to claim 1, wherein the electronic control unit (100) is connected to the interface device (115) by means of a remote and wireless communication system (C) provided with a transmitter device (T) operatively connected to the electronic control unit (110) and to a receiver device (R) operatively connected to the electronic interface device (115).

8. Apparatus (10) according to claim 1, wherein the rod (55) is slidably inserted inside a guide tube (G).

## Patentansprüche

1. Vorrichtung (10) zum Erfassen und Signalisieren des Bruchs einer Rolle (15) in einem Rollenförderer, der mit einer Reihe von Rollen versehen ist, die nebeneinander entlang einer Vorschubrichtung (A) angeordnet sind, wobei die Vorrichtung (10) mit einer Überwachungseinheit (25) ausgestattet ist, die konfiguriert ist, um den Bruch einer Rolle (15) in einer Gruppe von Rollen der Reihe von Rollen zu erfassen, und die umfasst:
- einen Stab (30), der geeignet ist, in der Ebene auf einem Ende der Rollen (15) der Gruppe von Rollen aufgesetzt zu werden, wobei der Stab mit einem ersten axialen Ende (B1) und einem zweiten axialen Ende (B2) versehen ist, das dem ersten axialen Ende (B1) gegenüberliegt und zwischen einer ersten Position, in der das erste axiale Ende (B1) und das zweite axiale Ende (B2) mindestens teilweise auf entsprechenden Bezugsebenen (O) liegen, und einer zweiten Position, in der mindestens eines von entweder dem ersten axialen Ende (B1) oder dem zweiten axialen Ende (B2) aufgrund des Bruchs einer Rolle (15) auf einem höheren Niveau als die entsprechende Bezugsebene (O) liegt,
- eine Stange (55), die mit einem Abschnitt (S) versehen ist, der geeignet ist, mit dem Stab (30) in Kontakt zu kommen
- ein Verbindungselement (95), das konfiguriert ist, um den Abschnitt (S) der Stange (55) in Kontakt mit dem Stab (30) zu halten,
wobei die Stange (55) mindestens teilweise zusammen mit dem Stab (30) durch das Verbindungselement (95) zwischen einer ersten Position, die die Stange (55) einnimmt, wenn der Stab (30) in der ersten Position ist, und einer zweiten Position, die die Stange (55) einnimmt, wenn der Stab (30) in der zweiten Position ist, beweglich ist,
wobei die Überwachungseinheit (25) einen Sensor (100) umfasst, der betriebsmäßig mit einer elektronischen Steuereinheit (110) des Geräts (10) verbunden und konfiguriert ist, um den Durchgang der Stange (55) zwischen der ersten und der zweiten Position zu erfassen, und ein Aktivierungssignal erzeugt, das von der elektronischen Steuereinheit (110) erfasst werden kann, wenn sich die Stange (55) in der zweiten Position befindet,
und wobei die elektronische Steuereinheit (110) konfiguriert ist, um ein Alarmsignal an eine Schnittstellenvorrichtung (115) des Geräts (10) zu senden, wenn sie das von dem Sensor (100) erzeugte Aktivierungssignal erfasst.

2. Vorrichtung (10) nach Anspruch 1, wobei der Sensor (100) ein Schalter ist.

3. Vorrichtung (10) nach Anspruch 2, wobei der Schalter vom monostabilen Typ ist.

4. Vorrichtung (10) nach Anspruch 1, wobei das Verbindungselement ein elastisches Element (65) umfasst.

5. Gerät (10) nach Anspruch 1, wobei die Überwachungseinheit von einer Batterie (P) gespeist wird.

6. Vorrichtung (10) nach Anspruch 1, wobei die Schnittstellenvorrichtung (115) mindestens einen Bildschirm, einen Lichtsender und einen Lautsprecher umfasst.

7. Vorrichtung (10) nach Anspruch 1, wobei die elektronische Steuereinheit (100) mit der Schnittstellenvorrichtung (115) mittels eines drahtlosen Fernkommunikationssystems (C) verbunden ist, das mit einer Sendevorrichtung (T), die betriebsmäßig mit der elektronischen Steuereinheit (110) verbunden ist, und mit einer Empfangsvorrichtung (R), die betriebsmäßig mit der elektronischen Schnittstellenvorrichtung (115) verbunden ist, versehen ist.

8. Vorrichtung (10) nach Anspruch 1, wobei die Stange (55) gleitend in ein Führungsrohr (G) eingesetzt ist.

## Revendications

1. Appareil (10) pour la détection et le signalement de la rupture d'un rouleau (15) dans un transporteur à rouleaux muni d'une série de rouleaux agencés côte à côte le long d'une direction d'avancement (A), ledit appareil (10) étant équipé d'une unité de surveillance (25) configurée pour détecter la rupture d'un rouleau (15) dans un groupe de rouleaux de la série de rouleaux et comprenant :
- une barre (30), conçue pour être superposée en plan sur une extrémité des rouleaux (15) du groupe de rouleaux, la barre étant munie d'une première extrémité axiale (B1) et d'une seconde extrémité axiale (B2) opposée à la première extrémité axiale (B1) et mobile entre une première position, dans laquelle la première extrémité axiale (B1) et la seconde extrémité axiale (B2) se trouvent au moins partiellement sur des plans de référence respectifs (O), et une seconde position, dans laquelle au moins l'une parmi soit la première extrémité axiale (B1) soit la seconde extrémité axiale (B2) est à un niveau plus haut que le plan de référence correspondant (O) en raison de la rupture d'un rouleau (15),
- une tige (55) munie d'une partie (S) conçue pour être en contact avec la barre (30)
- un élément de liaison (95) configuré pour maintenir ladite partie (S) de la tige (55) en contact avec la barre (30),
dans lequel la tige (55) est au moins partiellement mobile conjointement avec la barre (30) par le biais de l'élément de liaison (95) entre une première position que la tige (55) occupe lorsque la barre (30) est dans la première position, et une seconde position, que la tige (55) occupe lorsque la barre (30) est dans la seconde position,
dans lequel l'unité de surveillance (25) comprend un capteur (100) connecté de manière fonctionnelle à une unité de commande électronique (110) de l'appareil (10) et configuré pour détecter le passage de la tige (55) entre la première et la seconde position et générer un signal d'activation détectable par l'unité de commande électronique (110) lorsque la tige (55) est dans la seconde position, et dans lequel l'unité de commande électronique (110) est configurée pour envoyer un signal d'alarme à un dispositif d'interface (115) de l'appareil (10) lorsqu'elle détecte le signal d'activation généré par le capteur (100).

2. Appareil (10) selon la revendication 1, dans lequel le capteur (100) est un commutateur.

3. Appareil (10) selon la revendication 2, dans lequel le commutateur est du type monostable.

4. Appareil (10) selon la revendication 1, dans lequel l'élément de liaison comprend un élément élastique (65).

5. Appareil (10) selon la revendication 1, dans lequel l'unité de surveillance est alimentée par une batterie (P).

6. Appareil (10) selon la revendication 1, dans lequel le dispositif d'interface (115) comprend au moins l'un parmi un écran d'affichage, un émetteur de lumière et un haut-parleur.

7. Appareil (10) selon la revendication 1, dans lequel l'unité de commande électronique (100) est connectée au dispositif d'interface (115) au moyen d'un système de communication à distance et sans fil (C) muni d'un dispositif émetteur (T) connecté de manière fonctionnelle à l'unité de commande électronique (110) et à un dispositif récepteur (R) connecté de manière fonctionnelle au dispositif d'interface électronique (115).

8. Appareil (10) selon la revendication 1, dans lequel la tige (55) est insérée de manière coulissante à l'intérieur d'un tube de guidage (G).
